# EUROPEAN PATENT SPECIFICATION

(11) **EP 1 852 478 B1**
(45) Date of publication and mention of the grant of the patent: **19.01.2011**
(21) Application number: 07008441.3
(22) Date of filing: 25.04.2007
(51) Int. Cl.: C09D 151/00, C08F 265/06, C08G 18/00, C09D 4/00

(54) **Aqueous paint composition, method of forming multilayered film, and coated article**
Wässrige Lackzusammensetzung, Verfahren zur Herstellung eines mehrschichtigen Überzugs und beschichteter Gegenstand
Composition de peinture aqueuse, procédé de formation d'un film multicouches, et article revêtu

(30) Priority: 02.05.2006 JP 2006128107
(43) Date of publication of application: 07.11.2007
(73) Proprietor: Mazda Motor Corporation, Aki-gun, Hiroshima 730-8670 (JP)
(72) Inventor: Koga, Kazuhi, Aki-gun HIROSHIMA 730-8670 (JP)
(74) Representative: Müller-Boré & Partner Patentanwälte

(56) References cited:
- EP-A1- 1 125 949
- JP-A- 2004 217 830
- US-A- 5 288 771
- US-A- 5 635 251
- US-A- 5 969 030
- US-A1- 2003 143 414
- US-B1- 6 815 081

## Description

The present invention relates to an aqueous paint composition for use for example in auto body coating, and a method of forming a multilayered film by using the aqueous paint composition.

Traditionally in coating of an article such as auto body, an electrodeposition film is first formed on a steel plate and then, a multilayered film consisting of an intermediate film, a base film, and a clear film is laminated thereon. In forming such a multilayered film, each coated paint was baked and hardened after application of the each paint for providing the film with particular film properties. Recently, however, a method of applying paints consecutively in the unhardened state without complete hardening of each coated paint by the so-called wet-on-wet method and then baking and hardening the resulting paint layers into the multilayered film has been used more widely, for improvement of processing efficiency, elimination of environmental hazardous substances such as carbon dioxide, and reduction of energy consumption in the coating step.

Organic solvent-based paint compositions have been used as such paints, but there is a need for a low VOC (Volatile Organic Compound) paint, for reduction of the adverse effects of the volatile components such as organic solvents in the paint composition. Accordingly, there is a shift toward an aqueous paint, which employs water as its dilution solvent and contains a smaller amount of organic solvent, and proposed was a method of using aqueous paints as the paints for an intermediate film and a base film and forming a multilayered film by the wet-on-wet method similarly to the organic solvent-based paint.

For example, proposed was a multilayered film-forming method of applying a first aqueous paint on a coating article, applying a second aqueous paint thereon after adjustment of the gel fraction of the first aqueous paint applied to 5 mass % or more, applying a clear paint after vaporization of water in the second aqueous paint applied, and then hardening the three-layered paint obtained simultaneously under heat (see, Patent Document 1 : Japanese Unexamined Patent Publication No. 2001-342423), and a method of applying purified water or a liquid mixture of purified water and aqueous paint solvent component on the aqueous paint-coated face of the over-coated aqueous paint in overlaying an aqueous paint having a viscosity of 1,600 to 2,000 cp by the wet-on-wet method (see, Patent Document 2 : Japanese Unexamined Patent Publication No. 8-215633).

However, when such an aqueous paint is used for the first aqueous paint for the base film and the second aqueous paint for the intermediate film and the films are formed consecutively by the wet-on-wet method without complete hardening, water contained in the aqueous paint, which is less volatile, leads to mixing of the paints at the interlayer under the undried state of the coated paint, causing film defects and deterioration in appearance. For that reason, for preparation of a multilayered film superior in appearance with an aqueous paint, it is preferable to treat the coated paint after application of each paint in a preheating step at approximately 80 to 100°C, for increase in paint viscosity by vaporization of water in the coated paint. In addition, it is preferable to cool the coated paint before coating of the next paint, because the coated paint is heated by preheating. As a result, it was necessary to place the preheating step and the cooling step every time for coating each aqueous paint, even though the baking and hardening steps for each coated paint were eliminated by the wet-on-wet method, and thus, when an aqueous paint is used in coating by the wet-on-wet method, the processing efficiency and energy reduction were still insufficient.

On the other hand, lowering the temperature of the preheating step and shortening of the cooling step thereby are effective for improvement in processing efficiency and reduction of energy consumption in the preheating and cooling steps. However, with a conventional aqueous paint, lowering the temperature in the preheating step often resulted in deterioration in appearance, because of high compatibility between coated paints, in particular between a coated base paint and a coated clear paint.

Further, it is also necessary to provide the aqueous paint with favorable storage stability for improvement of the processing efficiency, and an obtained film is required to have a water resistance similar to those obtained after drying and complete hardening after each coating.

US 5,969,030 discloses a coating composition including a core-shell type emulsion resin (a'), which is made by a two-step emulsion polymerization process and the core is obtained by emulsion polymerization of a mixture of a hydrophobic polymeric compound and α,β-ethylenically unsaturated monomers.

Objects of the present invention, which was made to solve the problems above, are to provide an aqueous paint composition giving a multilayered film superior in appearance and water resistance that allows improvement of processing efficiency and reduction of energy consumption when a multilayered film is formed by using an aqueous paint by a wet-on-wet method for reduction of VOC emission, a method of forming a multilayered film by using the same, and a coated article obtained by using the multilayered film.

An aspect of the present invention is an aqueous paint composition for a second aqueous paint for forming a multilayered film by coating a first aqueous paint, the second aqueous paint, and a clear paint sequentially by wet-on-wet method, containing an emulsion resin (a) obtained by emulsion polymerization of a monomer mixture containing a cross-linking vinyl monomer having two or more radically polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint composition, wherein the emulsion resin (a) has a core-shell structure, and wherein the emulsion resin (a) is obtained by emulsion polymerization of the monomer mixtures containing the cross-linking vinyl monomer as their monomer component respectively in both of the core region and shell region in the core-shell structurecross-linking.

The aqueous paint composition in an embodiment of the present invention is an aqueous paint composition used as a second aqueous paint that is coated between a first aqueous paint and a clear paint by the wet-on-wet method, containing an emulsion resin (a) obtained by emulsion polymerization of a monomer mixture containing a cross-linking vinyl monomer having two or more radically polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint composition, wherein the emulsion resin (a) has a core-shell structure, and wherein the emulsion resin (a) is obtained by emulsion polymerization of the monomer mixtures containing the cross-linking vinyl monomer as their monomer component respectively in both of the core region and shell region in the core-shell structurecross-linking.

Generally, an uncrosslinked emulsion resin obtained by emulsion polymerization of a vinyl monomer is more soluble in a solvent and compatible with a solvent, resin and others contained in clear paint. Accordingly when a clear paint is coated on a second aqueous paint by the wet-on-wet method, the solvent, resin and others in the clear paint penetrate more easily into the emulsion under the unhardened state. In contrast, the emulsion resin (a), which is an emulsion resin obtained by emulsion polymerization of a monomer mixture containing a cross-linking vinyl monomer as its monomer components, allows formation of a crosslinked structure in the emulsion particle, which leads to inhibition of penetration of the clear paint components into the coated second aqueous paint.

The emulsion resin (a) has a core-shell structure. A single-layered emulsion resin may be used as the emulsion resin (a), but in such a case, the aqueous paint becomes less viscous, possibly causing fluidity of the applied paint and also deterioration in so-called dripping property. In contrast, an emulsion resin having the core-shell structure, which provides the paint with the thixotropic property, improves the dripping property as well.

The cross-linking vinyl monomer in the emulsion resin (a) is used as the monomer component common to the core and shell regions. It is possible to obtain an emulsion resin having core and shell regions each having the crosslinked structure by emulsion polymerization of the monomer mixture containing a cross-linking vinyl monomer in both core and shell regions, and also to obtain an emulsion resin having the crosslinked structure also between the core and shell regions because the monomer mixture contains the cross-linking vinyl monomer. This enables to restrict penetration of the clear paint component into the emulsion resin and thus to obtain a multilayered film superior in appearance by lowering an interlayer compatibility between the coated paints. Especially, it is possible to reduce the compatibility with the clear paint even when the second aqueous paint is preheated at a low temperature of 40 to 60°C, and to prevent penetration of the clear paint components sufficiently even when a clear paint is coated without an additional cooling step after the preheating step at low temperature.

The cross-linking vinyl monomer used in polymerization of the emulsion resin (a) is a compound having two or more radically-polymerizable ethylenic unsaturated groups in the molecule, and examples thereof include divinyl compounds such as divinylbenzene, ethylene glycol di(meth)acrylate, hexane diol di(meth)acrylate, polyethylene glycol di(meth)acrylate, allyl (meth)acrylate, 1,4-butanediol di(meth)acrylate, 1,6-hexane diol di(meth)acrylate, neopentylglycol di(meth)acrylate, and pentaerythritol di(meth)acrylate; pentaerythritol tri(meth)acrylate, trimethylolpropane tri(meth)acrylate, dipentaerythritol hexa(meth)acrylate, and the like, and these compounds may be used alone or in combination of two or more.

The amount of the cross-linking vinyl monomer used is 0.5 to 10 mass %, preferably 2 to 9 mass %, with respect to the entire monomer composition. An amount of less than 0.5 mass % is insufficient in the amount of cross-linking vinyl monomer, leading to lower crosslinking and thus to larger interlayer compatibility, while an amount of more than 10 mass % leads to more frequent gelation of the resin in the production process, hindering production.

In addition to the cross-linking vinyl monomers, a carboxyl group-containing vinyl monomer, a hydroxyl group-containing vinyl monomer, and other polymerizable vinyl monomers are used as the monomer components in the emulsion resin (a).

Use of the carboxyl group-containing vinyl monomer as the monomer component leads to improvement in the stability of the obtained emulsion resin such as the storage stability, and the monomer also functions as a catalyst accelerating the curing reaction between the emulsion resin (a) and the hardener (d) in hardening with a paint composition.

Examples of the carboxyl group-containing vinyl monomers include acrylic acid, methacrylic acid, crotonic acid, isocrotonic acid, ethacrylic acid, propylacrylic acid, isopropylacrylic acid, itaconic acid, maleic anhydride, fumaric acid and the like, and these monomers may be used alone or in combination of two or more.

Using of the hydroxyl group-containing vinyl monomer as the monomer component, the hydroxyl group behaves as a reaction group against the hardener (d),and makes the emulsion resin more hydrophilic, and it leads to improvement in processability and stability against freezing when the emulsion resin obtained is used as a paint composition.

Examples of the hydroxyl group-containing vinyl monomers include 2-hydroxyethyl (meth)acrylate, 2-hydroxypropyl (meth)acrylate, 4-hydroxybutyl (meth)acrylate, ε-caprolactone-modified acrylic monomer manufactured by Daicel Chemical Industries, Ltd. such as "Placcel FA-1", "Placcel FA-2", "Placcel FA-3", "Placcel FM-1", "Placcel FM-2", and "Placcel FM-3", and the like, and these monomers may be used alone or in combination of two or more.

Examples of the other polymerizable vinyl monomers other than the vinyl monomers above include saturated alkyl (meth)acrylates containing no carboxyl or hydroxyl group used in production of common acrylic emulsion resins such as methyl (meth)acrylate, ethyl (meth)acrylate, propyl (meth)acrylate, n-butyl (meth)acrylate, isobutyl (meth)acrylate, t-butyl (meth)acrylate, hexyl (meth)acrylate, 2-ethylhexyl (meth)acrylate, octyl (meth)acrylate, nonyl (meth)acrylate, decyl (meth)acrylate, dodecyl (meth)acrylate, stearyl (meth)acrylate, and the like, and these monomers may be used alone or in combination of two or more.

Use of such an other polymerizable vinyl monomer allows control of the glass transition temperature and the solubility parameter of the emulsion resin obtained.

In addition to the other polymerizable vinyl monomers above, a styrene-based monomer may be used as the monomer in the emulsion resin (a). Examples of the styrene-based monomers include styrene, α-methylstyrene and the like, and these monomers may be used alone or in combination of two or more.

The emulsion resin (a) is preferably prepared in emulsion polymerization of such monomer components by a known method, but the acid value of the entire emulsion resin is preferably 1 to 30 mg KOH/g. By adjusting the acid value of the resin in the range above, it is possible to improve various stabilities of the emulsion resin or the aqueous paint composition using the same such as storage stability, mechanical stability, stability against freezing, advance the curing reaction with the hardener (d) such as melamine resin during film formation sufficiently, and improve the strength, chipping resistance, and water resistance of the film. The acid value can be adjusted by selecting the kinds of monomer components and the blending rate properly to make the resin have an acid value in the range above.

Alternatively, the hydroxyl value of the entire emulsion resin (a) is preferably 30 to 80 mg KOH/g. By adjusting the hydroxyl value in the range above, it is possible to obtain a resin with suitable hydrophilicity, improve the processability and the stability against freezing when used as a paint composition containing the emulsion resin, accelerate the curing reaction with the hardener (d) such as melamine resin or isocyanate hardener, and make the obtained film superior in water resistance and chipping resistance. The hydroxyl value can be adjusted by selecting the kinds of the monomer components and the blending rate properly to make the resin have a hydroxyl value in the range above.

When the emulsion resin (a) is an emulsion resin having the core-shell structure, the monomer composition of the monomer mixture for each of the core and shell regions is not particularly limited, if it contains a cross-linking vinyl monomer, a carboxyl group-containing vinyl monomer, a hydroxyl group-containing vinyl monomer, and other polymerizable vinyl monomers, in the entire monomer composition for the core and shell regions, but the content of the cross-linking vinyl monomer in the monomer mixture of shell region is preferably higher than that in the monomer mixture of core region, for reduction of compatibility with the clear paint. It is possible to improve the crosslinking efficiency in the shell region and prevent penetration of the clear paint further by increasing the cross-linking vinyl monomer content in the monomer composition for the shell region. Similarly for improvement of the crosslinking efficiency of the shell region, it is preferable to make the content of the carboxyl group-containing monomer in the monomer composition for the shell region greater than that of the monomer composition for the core region.

In the case of the emulsion resin having the core-shell structure, the ratio of the core to shell region, core/shell by mass, is preferably 50/50 to 95/5. It is possible to control the ranges of the core and shell regions, by adjusting the amount of each monomer mixture in multi-phase polymerization.

An emulsion resin having the core-shell structure is preferably prepared first by forming the core region by emulsion polymerization of a monomer mixture containing the cross-linking vinyl monomers above and then by forming the shell region by emulsion polymerization of a monomer mixture containing the cross-linking vinyl monomer.

The emulsion polymerization is performed, for example, by adding each monomer mixture dropwise and agitating the mixture under heat in water or an aqueous medium containing as needed an organic solvent such as alcohol in the presence of a radical polymerization initiator and an emulsifier. The reaction temperature is, for example, approximately 30 to 100°C; the reaction time is preferably, for example, approximately 1 to 10 hours; and the monomer mixture or the monomer preemulsion may be added at once or dropwise gradually into a reaction vessel containing water and an emulsifier, while the reaction temperature is regulated.

Any known initiator normally used in emulsion polymerization of acrylic resins may be used as the radical polymerization initiator. A specific example of the water-soluble free radical polymerization initiator for use is an aqueous solution of a persulfate acid salt such as potassium persulfate, sodium persulfate, or ammonium persulfate. Alternatively, a so-called redox initiator in combination of an oxidizing agent such as potassium persulfate, sodium persulfate, ammonium persulfate, or hydrogen peroxide and a reducing agent such as sodium hydrogen sulfite, sodium thiosulfate, Rongalite, or ascorbic acid is also favorably used as an aqueous solution thereof.

An anionic or nonionic emulsifier selected from micell-forming compounds having a hydrocarbon group having 6 or more carbon atoms and a hydrophilic region such as carboxylate salt, sulfonate salt or partially sulfated ester in the same molecule is used as the emulsifier. In addition to the commonly-used anionic or nonionic emulsifiers, various anionic, nonionic reactive emulsifiers having a radically-polymerizable unsaturated double bond in the molecule such as acrylic-based group, methacrylic-based group, propenyl-based group, allyl-based group, allylether-based group, or maleic acid-based group are also used favorably alone or in combination of two or more.

A chain-transfer agent for regulation of molecular weight such as a mercaptan compound or a lower alcohol may be used additionally in emulsion polymerization.

The particle diameter of the emulsion resin (a) thus obtained is preferably 50 to 500 nm. In the range above, it is possible to improve the processing efficiency and obtain a multilayered film superior in appearance. The particle diameter can be controlled, for example, by adjusting the monomer composition and the condition of the emulsion polymerization.

The content of the emulsion resin (a) in the aqueous paint composition is 40 to 60 parts by mass with respect to 100 parts by mass of the resin solid matter in the paint composition. An emulsion resin (a) content of less than 40 parts by mass leads to insufficient amount of the emulsion resin (a), to higher interfacial compatibility and thus to deterioration in appearance, while an content of more than 60 parts by mass to aggregation of emulsion particles because of the property inherent to particulate emulsion resin, to distinct surface irregularity of the film and thus to deterioration in appearance.

The aqueous paint composition contains, in addition to the emulsion resin (a), the amide group-containing water-soluble acrylic resin (b) in an amount of 1 to 5 parts by mass, with respect to 100 parts by mass of the paint resin solid matter. A resin containing the amide group-containing water-soluble acrylic resin is more polar, and thus, separated from the clear paint more distinctively and resistant to high interfacial compatibility A content of the amide group-containing water-soluble acrylic resin (b) of less than 1 part by mass leads to higher interfacial compatibility, while a content of more than 5 parts by mass to deterioration in water resistance of the obtained film.

The amide group-containing water-soluble acrylic resin (b) is preferably a resin using an amide group-containing monomer as its monomer component, and the monomer component is normally a (meth)acrylamide-based compound. Examples of the (meth)acrylamide-based compound include acrylamide, methacrylamide, N,N-dimethylacrylamide, N,N-dimethyl methacrylamide, N,N-dibutyl acrylamide, N,N-dibutyl methacrylamide, N,N-dioctyl acrylamide, N,N-dioctyl methacrylamide, N-monobutyl acrylamide, N-monobutyl methacrylamide, N-monooctyl acrylamide, N-monooctyl methacrylamide, and the like, and these compounds may be used alone or in combination of two or more.

In addition to the emulsion resin (a), the aqueous paint composition contains a urethane emulsion (c) in an amount of 5 to 20 parts by mass, with respect to 100 parts by mass of the paint resin solid matter. Addition of the urethane emulsion (c) results in thickening and reduction of the interlayer compatibility of the aqueous paint, even without significant reduction of the water content in the coated aqueous paint in the low-temperature preheating step. Thus, a content of the urethane-emulsion (c) of less than 5 parts by mass leads to higher interlayer compatibility, while a content of more than 20 parts by mass to deterioration in stability of the paint.

The urethane emulsion can be prepared by any known method. For example, a urethane emulsion is prepared by preparing a urethane prepolymer in reaction of a diisocyanate with glycol and a carboxylic acid group-containing glycol, neutralizing and chain-extending the resulting prepolymer, and adding distilled water thereto.

The diisocyanate used in preparing the urethane prepolymer is not particularly limited; examples thereof include aliphatic, alicyclic, and aromatic diisocyanates; and typical examples thereof include 2,4-tolylene diisocyanate, 2,6-tolylene diisocyanate, 4,4'- diphenylmethane diisocyanate, m-phenylene diisocyanate, xylylene diisocyanate, tetramethylene diisocyanate, hexamethylene diisocyanate, lysine diisocyanate ester, 1,4-cyclohexylene diisocyanate, 4,4'-dicyclohexylmethane diisocyanate, 3,3'-dimethyl-4,4'-biphenylene diisocyanate, 3,3'-dimethoxy-4,4'-biphenylene diisocyanate, 1,5-naphthalene diisocyanate, 1,5-tetrahydronaphthalene diisocyanate, isophorone diisocyanate and the like.

The glycol is not particularly limited, and examples thereof include low-molecular weight glycols such as ethylene glycol, diethylene glycol, triethylene glycol, 1,2-propylene glycol, trimethylene glycol, 1,3-butylene glycol, tetramethylene glycol, hexamethylene glycol, hydrogenated bisphenol A, and bisphenol A ethyleneoxide or propyleneoxide adducts; polyols including polyethers such as polyethylene glycol and polypropylene glycol; polyesters such as condensates of ethylene glycol with adipic acid, hexanediol with adipic acid, and ethylene glycol with phthalic acid; polycaprolactones; and the like.

The neutralizing agent used when the urethane prepolymer prepared in reaction of the raw materials above is neutralized and chain-extended before preparation of the urethane emulsion by addition of distilled water is not particularly limited, and examples thereof include amines such as trimethylamine, triethylamine, tri-N-propylamine, tributylamine, triethanolamine, and dimethylethanolamine; sodium hydroxide, potassium hydroxide, ammonia and the like.

The chain extender is also not particularly limited, and examples thereof include polyols such as ethylene glycol and propylene glycol; aliphatic, alicyclic, or aromatic diamines such as ethylenediamine, propylenediamine, hexamethylenediamine, tolylenediamine, xylylenediamine, diphenyldiamine, diaminodiphenylmethane, diaminocyclohexylmethane, piperazine, 2-methylpiperazine, and isophoronediamine; water and the like.

Examples of the commercially available urethane emulsions include, but are not limited to, "Vondic" series products manufactured by Dainippon Ink and Chemicals, Inc., "Isoplanil" series products manufactured by Sumika Bayer, "Neorez" series manufactured by Avecia KK, and others. The urethane emulsions may be used alone or in combination of two or more.

The aqueous paint composition contains the hardener (d), in addition to the paint components above. The hardener (d) is not particularly limited; for example, known hardeners such as melamine resin and isocyanate resin are used alone or in combination of two or more; and in particular, melamine resins are used favorably. The content of the hardener is preferably 15 to 35 parts by mass with respect to 100 parts by mass of the resin solid matter in the aqueous paint composition. A hardener content of less than 15 parts by mass may lead to deterioration in the hardening efficiency and the water resistance as the film, while a content of more than 35 parts by mass to deterioration in the stability of the paint, prohibiting sufficient storage stability.

For example, a water-soluble acrylic resin, a polyurethane resin, a polyester resin, or the like may be added to the aqueous paint composition, in addition to the resin components, and in particular, when a solid matter such as pigment is added, a water-soluble acrylic resin is preferably used for dispersion of the pigment. The water-soluble acrylic resin is not particularly limited, if it is a common acrylic resin used in aqueous paint, and typical examples thereof include Aqualic series products manufactured by Nippon Shokubai Co., Ltd., Aron series products manufactured by Toagosei Co., Ltd., and others, and these resins may be used alone or in combination of two or more. The content of the water-soluble acrylic resin is not particularly limited, but is preferably, for example, 5 to 20 parts by mass, with respect to 100 parts by mass of the resin solid matter in the aqueous paint composition. The pigment in paint is well dispersed and thus the paint has favorable storage stability at an acrylic resin content of 5 parts or more by mass, and the favorable effects of other resin components are expressed sufficiently at a content of 20 parts or less by mass.

In addition to the resin components, a pigment may be added to the aqueous paint composition. The pigment is not particularly limited, if it is a pigment commonly used in aqueous paints. Typical examples thereof include coloring pigments such as titanium oxide, zinc white, iron oxide, titanium yellow, carbon black, cadmium red, molybdenum red, chromium yellow, chromium oxide, Prussian blue, cobalt blue, azo pigments, phthalocyanine pigments, quinacridone pigments, isoindoline pigments, threne pigments, and perylene pigments; extender pigments such as talc, clay, kaolin, baryta, barium sulfate, barium carbonate, calcium carbonate, silica, and alumina white; luster pigments such as mica powders coated with aluminum, copper, zinc, iron, nickel, tin, mica, or titanium oxide; and the like, and these pigments may be used alone or in combination of two or more. The amount of the pigment blended is preferably 1 to 20 mass %, with respect to the entire solid matter contained in the aqueous paint composition. A blending rate of 1 mass % or more allows expression of the favorable effects of the pigment, while a blending rate of 20 mass % or less gives a favorably smooth film.

The aqueous paint composition is prepared by blending the emulsion resin (a), the acrylic resin (b), the urethane emulsion (c), the hardener (d), and as needed the other compounds such as the pigments.

When the aqueous paint composition is used as the second aqueous paint, the first aqueous paint coated as the lower layer is not particularly limited, if it is an aqueous paint used as an intermediate paint in traditional wet-on-wet coating. Examples thereof include those containing various additives, such as a film-forming resin, a hardener, and a pigment such as luster pigment, coloring pigment or extender pigment, in the state dispersed or dissolved in an aqueous medium. Examples of the film-forming resins include polyester resins, acrylic resins, urethane resins, carbonate resins, epoxy resins, and the like. Combined use of an acrylic resin and/or a polyester resin and a melamine resin is preferable, from the viewpoints of pigment dispersion and processability. Commonly-used hardeners, pigments, and various additives are also used favorably. The first aqueous paint is prepared by a method similar to that for the aqueous paint composition according to the present embodiment. The first aqueous paint is not particularly limited, if it is aqueous, for example in the form of aqueous solution, aqueous dispersion, aqueous emulsion, or the like.

When the aqueous paint composition above is used as the second aqueous paint, the clear paint applied as the upper layer is not particularly limited, if it is a paint used as a clear paint in traditional wet-on-wet coating. For example, it contains a film-forming resin, a hardener and other additives as they are dispersed or dissolved in a medium. Examples of the film-forming resins include acrylic resins, polyester resins, epoxy resins, urethane resins and the like. The resin is preferably used in combination with a hardener such as of an amino resin and/or an isocyanate resin. For example, a combination of an acrylic resin and/or a polyester resin with an amino resin or an acrylic resin and/or a polyester resin having a carboxylic acid-epoxy group hardening system is preferably used from the viewpoint of transparency or acid-etching resistance.

The form of the clear paint is not particularly limited, and may be an organic paint, an aqueous paint (aqueous solution, dispersion or emulsion), a non-aqueous paint, or a powder paint; and the clear paint may contain as needed a curing catalyst, a surfactant, or others.

In forming a multilayered film consisting of the first aqueous paint, the second aqueous paint containing the aqueous paint composition above, and the clear paint, for example, on electrodeposited metal plate such as auto body, the multilayered film is formed by forming the three layers in the unhardened state consecutively by wet-on-wet method and hardening the layers all at once under heat (3-coat-1-bake (3C1B) method), instead of baking and hardening respective layers after each application. The method of applying the aqueous paint is not particularly limited, and the paint is applied, for example, by air electrostatic spraying or by spraying with a rotary atomizing electrostatic coating machine.

During wet-on-wet coating of the first and second aqueous paints, it is needed to install a preheating step for evaporating water in the coated paint and increasing the solid matter concentration thereof after coating; but, it is possible to make the paint more thixotropic by using the aqueous paint composition as the second aqueous paint, and there is no need for preheating the applied paint at a high temperature of 80 to 100°C as practiced traditionally, because it is possible to prevent penetration of clear paint components into the lower paint layer even when the clear paint is coated in the unhardened state. For example, even with processing in a low-temperature preheating step at approximately 40 to 60°C at which water is not evaporated sufficiently, it is possible to reduce the high interlayer compatibility between the clear paint layer and the second aqueous paint layer and give the film superior in appearance. The period of the preheating step is preferably shorter for improvement in processing efficiency and reduction of energy. It is possible to prepare the multilayered paint sufficiently lower in interlayer compatibility under the low-temperature condition in a short period of time of 1 to 3 minutes, by using the second aqueous paint containing the aqueous paint composition above. As described above, the second aqueous paint layer after the preheating step is not heated to high temperature because the low-temperature preheating step is used, and thus, it is possible to shorten or eliminate the cooling step that is needed for applying a clear paint by the wet-on-wet method and thus to reduce energy consumption also in the wet-on-wet coating step using an aqueous paint.

All three paint layers thus coated are hardened by baking all at once to form the multilayered film. Baking is performed normally at a temperature of 110 to 180°C, preferably 120 to 160°C. It is thus possible to obtain a hardened film having a high crosslinking degree. A heating temperature of lower than 110°C may result in insufficient hardening, while a heating temperature of 180°C may give a harder and brittler film. The heating time may vary according to the temperature, and, for example, it is 10 to 60 minutes at a temperature of 120 to 160°C.

Hereinafter, the present invention will be described in more detail with reference to Examples, but it should be understood that the present invention is not limited by these Examples. "Part" in the following Examples means "part by mass".

### EXAMPLES

### <Preparation of emulsion resin>

135.4 parts of ion-exchange water was placed in a common reaction vessel for production of emulsion resin equipped with a stirrer, a thermometer, a condenser tube, a dropping funnel, and a nitrogen-supplying tube and heated to 80°C while stirred under a nitrogen stream. A monomer mixture for core region containing a first-stage monomer of each composition shown in Table 1, 0.5 part of an emulsifier Aqualon(Hitenol,for region name) HS-10 (manufactured by Dai-ichi Kogyo Seiyaku CO.LTD.), 0.5 part of Adeka Reasoap (80% aqueous solution, manufactured by Adeka Corporation), and 49.7 parts of ion-exchange water, and also an initiator solution containing 0.24 part of ammonium persulfate and 10 parts of ion-exchange water were added dropwise into the reaction vessel concurrently at 80°C over 2 hours. After dropwise addition, an obtained first-stage emulsion was aged at the same temperature for one hour.

A monomer mixture for shell region containing a second-stage monomer shown in Table 1, 0.2 part of Aqualon HS-10, and 24.7 parts of ion-exchange water and an initiator solution containing 0.08 part of ammonium persulfate and 7.4 parts of ion-exchange water were added dropwise into the reaction container concurrently at 80°C over 0.5 hour. After dropwise addition, the obtained emulsion was aged at the same temperature for two hours.

The emulsion was then cooled to 40°C and filtered through a 400-mesh filter; 87.1 parts of ion-exchange water and 0.32 part of dimethylaminoethanol were added thereto; and the emulsion was adjusted to pH 6.5, to give each emulsion resin (solid matter: 30 mass %). For an emulsion resin C, shell region was not prepared and a single-layer emulsion resin was formed. Properties of each emulsion resin thus obtained are summarized in Table 1.

**[Table 1]**

| | MONOMER | EMULSION RESIN | | | | | |
|---|---|---|---|---|---|---|---|
| | | A | B | C | D | E | F |
| FIRST-STAGE MONOMER | METHYL ACRYLATE (PART) | 30.21 | 33.21 | 53.75 | 30.21 | 30.21 | 35.21 |
| | ETHYL ACRYLATE (PART) | 27.37 | 27.37 | 27.37 | 27.37 | 27.37 | 27.37 |
| | 2-HYDROXYETHYL METHACRYLATE (PART) | 7.42 | 7.42 | 9.28 | 7.42 | 7.42 | 7.42 |
| | ETHYLENE GLYCOL DIMETHACRYLATE (PART) | 5 | 1.25 | 8.05 | 8.05 | 0 | 0 |
| | METHACRYLIC ACID (PART) | 0 | 0 | 1.55 | 0 | 0 | 0 |
| TOTAL CORE REGION (PART) | | 70 | 69.25 | 100 | 73.05 | 65 | 70 |
| SECOND-STAGE MONOMER | METHYL ACRYLATE (PART) | 23.54 | 26.59 | - | 23.54 | 23.54 | 26.59 |
| | 2-HYDROXYETHYL METHACRYLATE (PART) | 1.86 | 1.86 | - | 1.86 | 1.86 | 1.86 |
| | METHACRYLIC ACID (PART) | 1.55 | 1.55 | - | 1.55 | 1.55 | 1.55 |
| | ETHYLENE GLYCOL DIMETHACRYLATE (PART) | 3.05 | 0.75 | - | 0 | 8.05 | 0 |
| TOTAL SHELL-REGION (PART) | | 30 | 30.75 | - | 26.95 | 35 | 30 |
| TOTAL (PART) | | 100 | 100 | 100 | 100 | 100 | 100 |
| PROPERTIES | SOLID MATTER (%) | 30 | 30 | 30 | 30 | 30 | 30 |
| | SOLID MATTER ACID VALUE (MG KOH/g) | 10 | 10 | 10 | 10 | 10 | 10 |
| | SOLID MATTER HYDROXYL VALUE (MG KOH/g) | 40 | 40 | 40 | 40 | 40 | 40 |
| | AVERAGE PARTICLE DIAMETER (nm) | 250 | 250 | 250 | 250 | 250 | 250 |
| | CROSS-LINKING VINYL MONOMER / TOTAL MONOMER COMPONENTS (%) | 8.05 | 2.00 | 8.05 | 8.05 | 8.05 | 0 |

### <Examples 1 to 10 and Comparative Examples 1 to 7>

The following paints were used respectively as a first aqueous paint, a second aqueous paint, and a clear paint.

### (First aqueous paint)

130 parts of rutile type titanium dioxide dispersion paste (Disperbyk 190 manufactured by BYK Chemie GmbH, dispersant-containing paste, resin solid matter: 75 mass %), 165 parts of an acrylic emulsion (manufactured by Nippon Paint CO.LTD., resin solid matter: 30 mass %), 65 parts of a urethane emulsion (manufactured by Avecia, resin solid matter: 30 mass %), and 35 parts of a hardener Cymel 327 (melamine resin, manufactured by Mitsui Cytec Co., Ltd., resin solid matter: 90 mass %) were mixed; 1.0 part of Adekanol UH-814N (urethane association type thickener, manufactured by Adeka Corporation, active ingredient: 30 mass %) was added thereto while the mixture was stirred, to give a first aqueous paint.

### (Second aqueous paint)

Each emulsion resin obtained above, Alpaste MH8801 (aluminum pigment manufactured by Toyo Aluminum K.K.), a water-soluble acrylic resin (acid value: 50mg KOH/g, resin solid matter: 30 mass %), Cogum HW-62 (polyacrylamide, manufactured by Showa Highpolymer CO.LTD., resin solid matter: 15 mass %), and a hardener Cymer 204 (melamine resin, manufactured by Mitsui Cytec, resin solid matter: 80 mass %) were mixed at the composition shown in Table 2; and Neolet R960 (urethane emulsion, manufactured by Avecia, resin solid matter: 33 mass %) and aqueous dimethyl ethanolamine solution (10%) were added thereto, to give a second aqueous paint. The content of each resin component with respect to 100 parts by mass of the total resin solid matters is shown in parenthesis in Table 2.

### (Clear paint)

Mac flow 0-1800W Clear (acid epoxy-hardening clear paint, manufactured by Nippon Paint) was used as the clear paint.

The first aqueous paint, second aqueous paint and clear paint were diluted before coating under the following condition:
- First aqueous paint
   Thinner: ion-exchange water
   40 seconds /No.4 Ford cup/20°C
- Second aqueous paint
   Thinner: ion-exchange water
   45 seconds /No.4 Ford cup /20°C
- Clear paint
   Thinner: ethoxyethyl propionate /S-150(manufactured by Exxon Mobil corp., aromatic hydrocarbon solvent) = 1/1 (weight ratio) mixed solvent
   30 seconds /No.4 Ford cup/20°C

### (Formation of multilayered film)

Powernics 110 (cationic electrodeposition paint, manufactured by Nippon Paint CO.LTD.) was electrodeposition-coated on a zinc phosphate-treated dull steel plate to a dry coated film thickness of 20µm, and the paint was hardened under heat at 160°C for 30 minutes, to give a steel base plate. The first aqueous paint was coated on the base plate obtained to a thickness of 20µm by air spray coating, preheated at 80°C for 5 minutes, and cooled at room temperature for 1 minute. Then, each second aqueous paint of Examples or Comparative Examples in the composition shown in Table 2 was coated on the coated article by air spray coating to a thickness of 10µm and preheated at 60°C for 3 minutes. Without cooling after preheating, the clear paint was applied onto the coated article by air spray coating to a thickness of 35µm and hardened under heat at 140°C for 30 minutes, to give each test piece. Each test piece thus prepared was evaluated in the following manner: The evaluation results are summarized in Table 2.

### [Surface appearance]

The surface state of each test piece was analyzed by using a film appearance analyzer "Wave Scan" manufactured by BYK-Gardner. The observed value Wa represents the amount of the surface waviness of the film at a roughness of 0.1 to 0.3 mm, which corresponds to the glossiness of the film. The value Wc represents the amount of the surface waviness of the film at a roughness of 1 to 3 mm, which corresponds to the masking property of the film. The value Wd represents the amount of the surface waviness of the film at a roughness of 3 to 10 mm, which corresponds to the smoothness of the film. Each observed value is favorable when it is smaller.

### [Luster property]

The flop index of the test-piece coating face was determined as the luster property by using a varied-angle photometer MA-68 (manufactured by X-Rite). The result was evaluated according to the following criteria: very favorable: flop index of 12 or more, favorable: flop index of 10 or more and less than 12, and unfavorable: flop index of less than 10.

### [Water resistance]

A test piece was immersed in warm water at 40°C for 10 days, and the 60-degree glossiness of the test-piece coated surface before and after immersion was determined. A glossiness retention rate (60-degree glossiness after immersion/ 60-degree glossiness before immersion ×100) of 90% or more was regarded that there was no degradation in water resistance.

### [Storage stability]

The second aqueous paint was filled in a Ford cup No.4 having a particular capacity to a certain volume and allowed to flow out of a hole having a certain diameter, and the viscosity was determined by measuring the efflux time (unit: second) (by so-called Ford cup No.4 method). Then, the paint was left at 40°C for 10 days, and the viscosity of the paint was determined again by the same method, for evaluation of the change in viscosity.

**[Table 2]**

| | SECOND AQUEOUS PAINT COMPOSITION | | | | | | | | | EVALUATION RESULTS | | | | | |
|---|---|---|---|---|---|---|---|---|---|---|---|---|---|---|---|
| | (a) | | (b) | (c) | (d) | AQUEOUS ACRYLIC RESIN | ALPASTE MH8801 | AQUEOUS DIMETHYL -ETHANOL -AMINE SOLUTION | TOTAL | SURFACE APPEARANCE | | | LUSTER PROPERTY | WATER RESISTANCE | STORAGE STABILITY |
| | EMULSION RESIN | | AMIDE GROUP-CONTAINING AQUEOUS ACRYLIC RESIN | URETHANE EMULSION | MELAMINE RESIN | | | | | | | | | | |
| | KIND | (PART) | (PART) | (PART) | (PART) | (PART) | (PART) | (PART) | (PART) | Wa | Wc | Wd | | | |
| EXAMPLE 1 | A | 183.3 | 16.7 | 60.0 | 31.3 | 33.3 | 19.0 | 5.0 | 348.6 | 11.1 | 7.7 | 15.6 | 12 | FAVORABLE | FAVORABLE |
| | | (49.0) | (2.2) | (17.6) | (22.3) | (8.9) | | | | | | | | | |
| EXAMPLE 2 | A | 163.6 | 16.7 | 66.0 | 45.0 | 33.3 | 19.0 | 5.0 | 348.6 | 12.3 | 8.8 | 16.5 | 12 | FAVORABLE | FAVORABLE |
| | | (41.1) | (2.1) | (18.3) | (30.2) | (8.4) | | | | | | | | | |
| EXAMPLE 3 | A | 210.0 | 16.7 | 40.0 | 24.6 | 33.3 | 19.0 | 5.0 | 348.6 | 12.0 | 8.2 | 15.8 | 12 | FAVORABLE | FAVORABLE |
| | | (58.2) | (2.3) | (12.2) | (18.1) | (9.2) | | | | | | | | | |
| EXAMPLE 4 | A | 192.3 | 9.0 | 60.0 | 30.0 | 33.3 | 19.0 | 5.0 | 348.6 | 10.5 | 8.5 | 14.8 | 12 | FAVORABLE | FAVORABLE |
| | | (51.1) | (1.2) | (17.6) | (21.2) | (8.9) | | | | | | | | | |
| EXAMPLE 5 | B | 184.3 | 35.7 | 40.0 | 31.3 | 33.3 | 19.0 | 5.0 | 348.6 | 11.7 | 8.3 | 15.9 | 12 | FAVORABLE | FAVORABLE |
| | | (50.8) | (4.9) | (12.1) | (23.0) | (9.2) | | | | | | | | | |
| EXAMPLE 6 | B | 213.3 | 16.7 | 20.0 | 41.3 | 33.3 | 19.0 | 5.0 | 348.6 | 12.0 | 9.2 | 15.7 | 12 | FAVORABLE | FAVORABLE |
| | | (55.1) | (2.2) | (5.7) | (28.4) | (8.6) | | | | | | | | | |
| EXAMPLE 7 | B | 183.3 | 16.7 | 65.0 | 26.3 | 33.3 | 19.0 | 5.0 | 348.6 | 11.6 | 7.8 | 16.0 | 12 | FAVORABLE | FAVORABLE |
| | | (50.0) | (2.3) | (19.5) | (19.1) | (9.1) | | | | | | | | | |
| EXAMPLE 8 | C | 183.3 | 16.7 | 60.0 | 31.3 | 33.3 | 19.0 | 5.0 | 348.6 | 11.5 | 7.8 | 15.8 | 10 | FAVORABLE | FAVORABLE |
| | | (49.0) | (2.2) | (17.6) | (22.3) | (8.9) | | | | | | | | | |
| EXAMPLE 9 | D | 183.3 | 16.7 | 60.0 | 31.3 | 33.3 | 19.0 | 5.0 | 348.6 | 11.2 | 7.5 | 15.8 | 12 | FAVORABLE | FAVORABLE |
| | | (49.0) | (2.2) | (17.6) | (22.3) | (8.9) | | | | | | | | | |
| EXAMPLE 10 | E | 183.3 | 16.7 | 60.0 | 31.3 | 33.3 | 19.0 | 5.0 | 348.6 | 11.2 | 7.5 | 15.7 | 12 | FAVORABLE | FAVORABLE |
| | | (49.0) | (2.2) | (17.6) | (22.3) | (8.9) | | | | | | | | | |
| COMPARATIVE EXAMPLE 1 | F | 183.3 | 16.7 | 60.0 | 31.3 | 33.3 | 19.0 | 5.0 | 348.6 | 13.9 | 11.3 | 19.0 | 10 | FAVORABLE | FAVORABLE |
| | | (49.0) | (2.2) | (17.6) | (22.3) | (8.9) | | | | | | | | | |
| COMPARATIVE EXAMPLE 2 | A | 153.6 | 16.7 | 71.0 | 50.0 | 33.3 | 19.0 | 5.0 | 348.6 | 14.2 | 13.2 | 20.5 | 10 | FAVORABLE | FAVORABLE |
| | | (37.8) | (2.1) | (19.2) | (32.8) | (8.2) | | | | | | | | | |
| COMPARATIVE EXAMPLE 3 | A | 220.0 | 16.7 | 30.0 | 24.6 | 33.3 | 19.0 | 5.0 | 348.6 | 13.5 | 12.5 | 20.1 | 12 | FAVORABLE | FAVORABLE |
| | | (61.1) | (2.3) | (9.2) | (18.2) | (9.2) | | | | | | | | | |
| COMPARATIVE EXAMPLE 4 | A | 192.3 | 5.0 | 60.0 | 34.0 | 33.3 | 19.0 | 5.0 | 348.6 | 14.3 | 11.8 | 19.8 | 10 | FAVORABLE | FAVORABLE |
| | | (50.0) | (0.6) | (17.2) | (23.5) | (8.7) | | | | | | | | | |
| COMPARATIVE EXAMPLE 5 | A | 179.3 | 40.7 | 40.0 | 31.3 | 33.3 | 19.0 | 5.0 | 348.6 | 11.7 | 8.3 | 15.9 | 12 | WHITENED | FAVORABLE |
| | | (49.8) | (5.6) | (12.2) | (23.1) | (9.2) | | | | | | | | | |
| COMPARATIVE EXAMPLE 6 | B | 213.3 | 16.7 | 15.0 | 46.3 | 33.3 | 19.0 | 5.0 | 348.6 | 13.7 | 11.8 | 19.6 | 10 | FAVORABLE | FAVORABLE |
| | | (54.0) | (2.1) | (4.2) | (31.2) | (8.4) | | | | | | | | | |
| COMPARATIVE EXAMPLE 7 | B | 173.3 | 16.7 | 75.0 | 26.3 | 33.3 | 19.0 | 5.0 | 348.6 | 11.0 | 9.5 | 16.0 | 12 | FAVORABLE | VISCOSITY INCREASE BY 30 SECONDS |
| | | (47.2) | (2.3) | (22.5) | (19.1) | (9.1) | | | | | | | | | |

As shown in Table 2, the coating plates in Examples 1 to 10 prepared by using the aqueous paint composition according to the present invention as the second aqueous paint had favorable surface appearance even when coated by wet-on-wet method in the low-temperature preheating step without cooling after preheating. It is thus possible to reduce interlayer compatibility between paint layers, even when a clear paint is coated on a second aqueous paint in the unhardened state additionally, by using the aqueous paint composition according to the present invention. It was possible to prepare an aqueous paint containing a luster pigment that gives a coated film superior in luster, and such an aqueous paint, which contained a luster pigment favorably dispersed and also aqueous paint component other than emulsion resin to some extent, was superior in storage stability and also provided the film superior in water resistance.

In contrast, the coated articles prepared by using the aqueous paints of Comparative Example 1 to 7 as the second aqueous paints were inferior in at least one of surface appearance, luster property, water resistance, and storage stability when it is processed only in the low-temperature preheating step, if an emulsion resin containing no cross-linking vinyl monomer was used as its monomer component, if the content of the cross-linking vinyl monomer when used in the monomer components was not in the favorable range of the present invention, or if the composition in the aqueous paint was outside the favorable range of the present invention.

As described above, an aspect of the present invention is an aqueous paint composition for a second aqueous paint for forming a multilayered film by coating a first aqueous paint, the second aqueous paint, and a clear paint sequentially by the wet-on-wet method, comprising an emulsion resin (a) obtained by emulsion polymerization of a monomer mixture containing a cross-linking vinyl monomer having two or more radically-polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint compositioncross-linking. In the composition above, the emulsion resin (a), which is obtained by emulsion polymerization of the monomer mixture containing the cross-linking vinyl monomer as its monomer components, has a crosslinked structure in the emulsion particle, and, for that reason, the emulsion resin (a) prohibits penetration of the clear paint components into the second aqueous paint layer and improves interfacial compatibility between the paint layers, even when an aqueous paint is coated on the layer by the wet-on-wet method. The paint, which contains the emulsion resin and additionally the amide group-containing water-soluble acrylic resin (b), the urethane emulsion (c), and the hardener (d) in the particular composition, gives an aqueous paint superior in storage stability and a multilayered film superior in water resistance. Thus, it is possible to improve the processing efficiency and reduce energy consumption in forming the multilayered film by coating the first aqueous paint, the second aqueous paint, and the clear paint consecutively by the wet-on-wet method, and give the multilayered film superior in appearance and water resistance.

The emulsion resin (a) in the aqueous paint composition has a core-shell structure. In the composition above, the emulsion resin (a) having the core-shell structure makes the resulting paint thixotropic.

The aqueous paint composition contains the emulsion resin (a) obtained by emulsion polymerization of monomer mixtures containing the cross-linking vinyl monomer as their monomer component respectively in both of the core region and shell region in the core-shell structurecross-linking. In the composition above, it is possible to obtain the emulsion resin having core and shell regions respectively having the crosslinked structure and the crosslinked structure between the core and shell regions, because they contain the monomer reactive with the cross-linking vinyl monomer, and thus, to give a second aqueous paint layer protected from penetration of the clear paint components, lower in interfacial compatibility between the layers and to obtain a multilayered film superior in appearance.

In addition, the acid value of the emulsion resin (a) in the aqueous paint composition is preferably 1 to 30 mg KOH/g. In the composition above, it is possible to improve various properties of the emulsion resin and the aqueous paint composition using the same, such as storage stability, mechanical stability, and anti-freezing stability, advance the curing reaction with a hardener such as melamine resin during formation of film, and thus, improve the various properties of the film such as strength, chipping resistance, and water resistance.

Further, the aqueous paint composition preferably contains a pigment in an amount of 1 to 20 mass %, and the pigment more preferably contains a luster pigment. Because the paint composition according to the present invention contains, in addition to the emulsion resin (a), the amide group-containing water-soluble acrylic resin (b), the urethane emulsion (c), and the hardener (d) respectively in a particularly composition, it gives the aqueous paint superior in pigment dispersion and storage stability even when it contains the pigment.

Another aspect of the present invention is a method of forming a multilayered film as defined in claim 5, comprising a step of coating a first aqueous paint, a second aqueous paint, and a clear paint consecutively by the wet-on-wet method and a step of baking for hardening the coated three paint layers all at once, wherein the second aqueous paint contains an emulsion resin (a) obtained by emulsion polymerization of a monomer mixture containing a cross-linking vinyl monomer having two or more radically-polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint composition. In the composition above, the emulsion resin (a) in the second aqueous paint, which is the emulsion resin obtained by emulsion polymerization of the monomer mixture containing the cross-linking vinyl monomer, and the carboxyl group-containing vinyl monomer and the hydroxyl group-containing vinyl monomer reactive with the cross-linking vinyl monomer as its monomer components, has a crosslinked structure in the emulsion particle, and thus, it is possible to prevent penetration of the clear paint components into the second aqueous paint layer and improve interfacial compatibility between the layers even when the clear paint is coated on the second aqueous paint layer by the wet-on-wet method and the coated three layers are baked and hardened all at once. In addition, because the second aqueous paint contains the emulsion resin and also the amide group-containing water-soluble acrylic resin (b), the urethane emulsion (c), and the hardener (d) respectively in particular amounts, it is possible to obtain the aqueous paint superior in storage stability and the multilayered film superior in water resistance.

In the method of forming a multilayered film above, the emulsion resin (a) has a core-shell structure. In the composition above, it is possible to make the paint thixotropic because the emulsion resin (a) has the core-shell structure.

Also in the method of forming a multilayered film, there is used, as the emulsion resin (a), the emulsion resin obtained by emulsion polymerization of monomer mixtures containing the cross-linking vinyl monomer as their monomer component respectively in both of the core region and shell region in the core-shell structurecross-linking. In the composition above, because the emulsion resin (a) has the core and shell regions having a crosslinked structure and contains both in the core and shell regions the monomer reactive with the cross-linking vinyl monomer, it is possible to form the emulsion resin having the crosslinked structure also between the core and shell regions and give the second aqueous paint layer resistant to penetration of the clear paint components, lower in compatibility between layers and obtain a multilayered film superior in appearance.

Further in the method of forming a multilayered film, the emulsion resin (a) preferably has an acid value of 1 to 30 mg KOH/g. In such a composition, it is possible to improve various properties of the emulsion resin and the aqueous paint composition using the same, such as storage stability, mechanical stability, stability against freezing, and advance the curing reaction with a hardener such as melamine resin during formation of the film, and thus improve various properties of the film such as strength, chipping resistance, and water resistance.

The method of forming a multilayered film preferably includes a preheating step of drying the coated paint at 40 to 60°C after coating of the second aqueous paint and before coating of the clear paint. The second aqueous paint is resistant to penetration of the clear paint components into the paint even when it is coated by the wet-on-wet method, which eliminates a need for a high-temperature preheating step, and has a lowered compatibility with the clear paint even when preheated at a low temperature of 40 to 60°C. The method of forming a multilayered film according to the present invention allows coating of the clear paint without cooling in a cooling step, because the preheating is performed at the low temperature.

In the method of forming a multilayered film, the second aqueous paint preferably contains the pigment in an amount of 1 to 20 mass %, and the pigment more preferably contains a luster pigment. The paint composition according to the present invention, which contains the emulsion resin (a) and also the amide group-containing water-soluble acrylic resin (b), the urethane emulsion (c), and the hardener (d) respectively in a particular composition, gives the aqueous paint superior in pigment dispersion and storage stability even if it contains the pigment.

Another aspect of the present invention is a coated articled having the multilayered film obtained by the method of forming a multilayered film.

## Claims

1. An aqueous paint composition for a second aqueous paint for forming a multilayered film by coating a first aqueous paint, the second aqueous paint, and a clear paint sequentially by the wet-on-wet method, comprising an emulsion resin (a) obtained by emulsion polymerization of a monomer mixture containing a cross-linking vinyl monomer having two or more radically-polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint composition,
wherein the emulsion resin (a) has a core-shell structure, and
wherein the emulsion resin (a) is obtained by emulsion polymerization of the monomer mixtures containing the cross-linking vinyl monomer as their monomer component respectively in both of the core region and shell region in the core-shell structurecross-linking.

2. The aqueous paint composition according to Claim 1, wherein the acid value of the emulsion resin (a) is 1 to 30 mg KOH/g.

3. The aqueous paint composition according to Claim 1 or 2, further comprising a pigment in an amount of 1 to 20 mass %.

4. The aqueous paint composition according to Claim 3, wherein the pigment contains a luster pigment.

5. A method of forming a multilayered film, comprising a step of coating a first aqueous paint, a second aqueous paint, and a clear paint consecutively by the wet-on-wet method and a step of baking for hardening the coated three paint layers all at once, wherein
the second aqueous paint contains an emulsion resin (a) obtained by emulsion polymerization of a monomer mixture containing a cross-linking vinyl monomer having two or move radically-polymerizable ethylenic unsaturated groups at 0.5 to 10 mass % (with respect to all monomer components), a carboxyl group-containing vinyl monomer, a hydroxyl group-containing vinyl monomer, and other polymerizable vinyl monomers in an amount of 40 to 60 parts by mass, an amide group-containing water-soluble acrylic resin (b) in an amount of 1 to 5 parts by mass, a urethane emulsion (c) in an amount of 5 to 20 parts by mass, and a hardener (d) in an amount of 15 to 35 parts by mass, with respect to 100 parts by mass of the resin solid matter in the paint composition,
wherein the emulsion resin (a) has a core-shell structure, and
wherein the emulsion resin (a) is obtained by emulsion polymerization of the monomer mixtures containing the cross-linking vinyl monomer as their monomer component respectively in both of the core region and shell region in the core-shell structurecross-linking.

6. The method of forming a multilayered film according to Claim 5, wherein the acid value of the emulsion resin (a) is 1 to 30 mg KOH/g.

7. The method of forming a multilayered film according to Claim 5 or 6 , further comprising a preheating step of drying the coated paint at 40 to 60°C after coating of the second aqueous paint and before coating of the clear paint.

8. The method of forming a multilayered film according to Claim 17, wherein the clear paint is coated immediately after processing in the preheating step without processing in a cooling step.

9. The method of forming a multilayered film according to any one of Claims 5 to 8 , the second aqueous paint contains the pigment in an amount of 1 to 20 mass %.

10. The method of forming a multilayered film according to Claim 9, wherein the pigment contains a luster pigment.

## Patentansprüche

1. Wässrige Anstrichzusammensetzung für einen zweiten wässrigen Anstrich zum Bilden eines mehrschichtigen Films durch Auftragen eines ersten wässrigen Anstrichs, des zweiten wässrigen Anstrichs und eines Klaranstrichs nacheinander durch das Naß-in-Naß-Verfahren, umfassend
ein Emulsionsharz (a), erhalten durch Emulsionpolymerisation eines Monomergemisches, enthaltend ein vernetzendes Vinylmonomer mit zwei oder mehr radikalisch polymerisierbaren ethylenischen ungesättigten Gruppen bei 0,5 bis 10 Masse-% (bezüglich sämtlicher Monomerkomponenten), ein Carboxylgruppenenthaltendes Vinylmonomer, ein Hydroxylgruppen-enthaltendes Vinylmonomer und andere polymerisierbare Vinylmonomere in einer Menge von 40 bis 60 Masse-Teile,
ein Amidgruppen-enthaltendes wasserlösliches Acrylharz (b) in einer Menge von 1 bis 5 Masse-Teile, eine Urethanemulsion (c) in einer Menge von 5 bis 20 Masse-Teile und ein Härtungsmittel (d) in einer Menge von 15 bis 35 Masse-Teile, bezüglich 100 Masse-Teile der Harzfeststoffe in der Anstrichzusammensetzung, wobei das Emulsionsharz (a) eine Kern-Schale-Struktur aufweist und wobei das Emulsionsharz (a) durch Emulsionspolymerisation der Monomergemische, enthaltend das vernetzende Vinylmonomer als deren Monomerkomponente sowohl in dem Kernbereich als auch dem Schalenbereich in dem Kern-Schale-Strukturvernetzen, erhalten wird.

2. Wässrige Anstrichzusammensetzung gemäß Anspruch 1, wobei der Säurewert des Emulsionsharzes (a) 1 bis 30 mg KOH/g beträgt.

3. Wässrige Anstrichzusammensetzung gemäß Anspruch 1 oder 2, weiter umfassend ein Pigment in einer Menge von 1 bis 20 Masse-%.

4. Wässrige Anstrichzusammensetzung gemäß Anspruch 3, wobei das Pigment ein Glanzpigment enthält.

5. Verfahren zum Bilden eines mehrschichtigen Films, umfassend einen Schritt des Auftragens eines ersten wässrigen Anstrichs, eines zweiten wässrigen Anstrichs und eines Klaranstrichs nacheinander durch das Naß-in-Naß-Verfahren und einen Schritt des Backens zum Härten der aufgetragenen drei Anstrichschichten auf einmal, wobei der zweite wässrige Anstrich ein Emulsionsharz (a), erhalten durch Emulsionpolymerisation eines Monomergemisches, enthaltend ein vernetzendes Vinylmonomer mit zwei oder mehr radikalisch polymerisierbaren ethylenischen ungesättigten Gruppen bei 0,5 bis 10 Masse-% (bezüglich sämtlicher Monomerkomponenten), ein Carboxylgruppenenthaltendes Vinylmonomer, ein Hydroxylgruppen-enthaltendes Vinylmonomer und andere polymerisierbare Vinylmonomere in einer Menge von 40 bis 60 Masse-Teile, ein Amidgruppen-enthaltendes wasserlösliches Acrylharz (b) in einer Menge von 1 bis 5 Masse-Teile, eine Urethanemulsion (c) in einer Menge von 5 bis 20 Masse-Teile und ein Härtungsmittel (d) in einer Menge von 15 bis 35 Masse-Teile, bezüglich 100 Masse-Teile der Harzfeststoffe in der Anstrichzusammensetzung, enthält, wobei das Emulsionsharz (a) eine Kern-Schale-Struktur aufweist und wobei das Emulsionsharz (a) durch Emulsionspolymerisation der Monomergemische, enthaltend das vernetzende Vinylmonomer als deren Monomerkomponente sowohl in dem Kernbereich als auch dem Schalenbereich in dem Kern-Schale-Strukturvernetzen, erhalten wird.

6. Verfahren zum Bilden eines mehrschichtigen Films gemäß Anspruch 5, wobei der Säurewert des Emulsionsharzes (a) 1 bis 30 mg KOH/g beträgt.

7. Verfahren zum Bilden eines mehrschichtigen Films gemäß Anspruch 5 oder 6, weiter umfassend einen Vorerwärmungsschritt bezüglich des Trocknens des aufgetragenen Anstrichs bei 40 bis 60°C nach dem Auftragen des zweiten wässrigen Anstrichs und vor dem Auftragen des Klaranstrichs.

8. Verfahren zum Bilden eines mehrschichtigen Films gemäß Anspruch 7, wobei der Klaranstrich unmittelbar nach dem Behandeln in dem Vorerwärmungsschritt ohne Behandeln in einem Abkühlschritt aufgetragen wird.

9. Verfahren zum Bilden eines mehrschichtigen Films gemäß einem der Ansprüche 5 bis 8, wobei der zweite wässrige Anstrich das Pigment in einer Menge von 1 bis 20 Masse-% enthält.

10. Verfahren zum Bilden eines mehrschichtigen Films gemäß Anspruch 9, wobei das Pigment ein Glanzpigment enthält.

## Revendications

1. Composition de peinture aqueuse pour une seconde peinture aqueuse pour former un film multicouches par l'enduction d'une première peinture aqueuse, de la seconde peinture aqueuse et d'une peinture transparente de manière séquentielle selon un procédé humide sur humide, comprenant :
une résine (a) en émulsion obtenue par la polymérisation en émulsion d'un mélange de monomères contenant un monomère vinylique de réticulation possédant deux ou plus de deux groupes à insaturation éthylénique polymérisables par voie radicalaire en une proportion de 0,5 % à 10 % en poids (par rapport à tous les composants monomères), un monomère vinylique contenant un groupe carboxyle, un monomère vinylique contenant un groupe hydroxyle et d'autres monomères vinyliques polymérisables en une quantité de 40 à 60 parties en poids, une résine acrylique hydrosoluble contenant un groupe amide (b) en une quantité de 1 à 5 parties en poids, une émulsion d'uréthane (c) en une quantité de 5 à 20 parties en poids, et un durcisseur (d) en une quantité de 15 à 35 parties en poids, par rapport à 100 parties en poids de la matière solide de la résine se trouvant dans la composition de peinture,
la résine (a) en émulsion possédant une structure noyau-coque, et
la résine (a) en émulsion étant obtenue par la polymérisation en émulsion des mélanges de monomères contenant le monomère vinylique de réticulation en tant que leur composant monomère respectivement à la fois de la région de noyau et de la région de coque dans la réticulation de la structure noyau-coque.

2. Composition de peinture aqueuse selon la revendication 1, dans laquelle l'indice d'acide de la résine (a) en émulsion est de 1 mg à 30 mg de KOH/g.

3. Composition de peinture aqueuse selon la revendication 1 ou 2, comprenant en outre un pigment en une quantité de 1 % à 20 % en poids.

4. Composition de peinture aqueuse selon la revendication 3, dans laquelle le pigment contient un pigment de lustre.

5. Procédé de formation d'un film multicouches, comprenant une étape d'enduction consécutive d'une première peinture aqueuse, d'une seconde peinture aqueuse et d'une peinture transparente selon le procédé humide sur humide et une étape de cuisson pour durcir les trois couches enduites de peinture toutes ensemble, dans lequel
la seconde peinture aqueuse contient une résine (a) en émulsion obtenue par la polymérisation en émulsion d'un mélange de monomères contenant un monomère vinylique de réticulation possédant deux ou plus de deux groupes à insaturation éthylénique polymérisables par voie radicalaire en une proportion de 0,5 % à 10 % en poids (par rapport à tous les composants monomères), un monomère vinylique contenant un groupe carboxyle, un monomère vinylique contenant un groupe hydroxyle et d'autres monomères vinyliques polymérisables en une quantité de 40 à 60 parties en poids, une résine acrylique hydrosoluble contenant un groupe amide (b) en une quantité de 1 à 5 parties en poids, une émulsion d'uréthane (c) en une quantité de 5 à 20 parties en poids, et un durcisseur (d) en une quantité de 15 à 35 parties en poids, par rapport à 100 parties en poids de la matière solide de la résine se trouvant dans la composition de peinture,
la résine (a) en émulsion possédant une structure noyau-coque, et
la résine (a) en émulsion étant obtenue par la polymérisation en émulsion des mélanges de monomères contenant le monomère vinylique de réticulation en tant que leur composant monomère respectivement à la fois de la région de noyau et de la région de coque dans la réticulation de la structure noyau-coque.

6. Procédé de formation d'un film multicouche selon la revendication 5, dans lequel l'indice d'acide de la résine (a) en émulsion est de 1 mg à 30 mg de KOH/g.

7. Procédé de formation d'un film multicouches selon la revendication 5 ou 6, comprenant en outre une étape de préchauffage pour sécher la peinture enduite à une température allant de 40 °C à 60 °C après l'enduction de la seconde peinture aqueuse et avant l'enduction de la peinture transparente.

8. Procédé de formation d'un film multicouche selon la revendication 7, dans lequel la peinture transparente est enduite immédiatement après le traitement dans l'étape de préchauffage sans traitement dans une étape de refroidissement.

9. Procédé de formation d'un film multicouche selon l'une quelconque des revendications 5 à 8, la seconde peinture aqueuse contenant le pigment en une quantité de 1 % à 20 % en poids.

10. Procédé de formation d'un film multicouche selon la revendication 9, dans lequel le pigment contient un pigment de lustre.
